# EUROPEAN PATENT APPLICATION

(11) **EP 3 090 968 A1**
(43) Date of publication of application: **09.11.2016**
(21) Application number: 15166797.9
(22) Date of filing: 07.05.2015
(51) Int. Cl.: B65G 43/08, B65G 47/19, E21C 35/20, E21F 13/06

(54) **MATERIAL HANDLING SYSTEM AND METHOD OF OPERATING THE SAME**

(71) Applicant: Caterpillar Global Mining Europe GmbH, 44534 Lünen (DE)
(72) Inventor: RABE, Knut, 42113 Wuppertal (DE)
(74) Representative: Kramer Barske Schmidtchen Patentanwälte PartG mbB

(57) **Abstract**

A material handling system (100) for use in an underground mining comprises a conveyor (10). The conveyor (10) transports material from a plurality of draw points along a first direction (x). At each draw point, a feeder (12-26) is arranged. Each feeder (12-26) is configured to load a predetermined amount of material per unit time onto the conveyor (10) during a loading operation. A load calculating unit (28) calculates a load distribution of the material on the conveyor (10). The calculation is based on a movement speed of the conveyor (10) and an operating time of the plurality of feeders (12-26) during which a loading operation is performed. Based on the calculated load distribution, the loading operation of the plurality of feeders (12-26) is controlled to achieve a continuous coverage of conveyor 10 without overloading the same.

## Description

### Technical Field

The present disclosure generally relates to the field of continuous mining, in particular, to a material handling system for use in underground mining.

### Background

In underground mining systems, an ore material handling system is used for continuous ore extraction. For example, in caving exploitation, fragmented rock material is drawn at several draw points and loaded onto a conveyor to be transported to, for example, a crusher or the like. The crushed material is then transported for further processing. In this manner, a continuous rock flow can be achieved. An example of a method used for continuous ore extraction is disclosed in WO 2010/061274 A1.

The disclosed systems and methods are directed at least in part to improving known systems.

### Summary of the Disclosure

In one aspect, the present disclosure relates to a material handling system for use in underground mining. The material handling system comprises a conveyor configured to transport material along a first direction. The material handling system further comprises a plurality of feeders arranged adjacent to the conveyor at different positions in the first direction. Each of the plurality of feeders is configured to load a predetermined amount of material per unit time onto the conveyor during a loading operation. A load calculating unit is configured to calculate a load distribution of the material on the conveyor based on a movement speed of the conveyor in the first direction and operating times of the plurality of feeders during which the plurality of feeders perform the loading operation. A control unit is configured to control the loading operation of the plurality of feeders based on the calculated load distribution.

In another aspect, the present disclosure relates to an underground mining system comprising a plurality of material handling systems in accordance with the above aspect. The underground mining system further comprises a main conveyor configured to receive the material transported by the conveyor of each material handling system.

In a further aspect of the disclosure, a method of operating a material handling system comprising a conveyor configured to transport material along a first direction and a plurality of feeders arranged adjacent to the conveyor at different positions in the first direction comprises the steps of determining an amount of material per unit time loaded onto the conveyor by each feeder during a loading operation, calculating a load distribution of the material on the conveyor based on a movement speed of the conveyor in the first direction and operating times of the plurality of feeders during which the plurality of feeders perform the loading operation, and controlling the loading operation of the plurality of feeders based on the calculated load distribution.

In yet another aspect of the disclosure, a computer program comprises computer-executable instructions which, when run on a computer, cause the computer to perform the steps of the method of the above aspect.

In the above aspects, the load calculating unit may calculate the load distribution by dividing a length of the conveyor into a plurality of segments. For each segment, the load calculating unit may determine the amount of time that the segment is in a loading zone of a feeder as the feeder performs the loading operation, based on a width of the loading zone of the feeder and the movement speed of the conveyor. The load calculation may calculate the amount of material loaded onto the segment by multiplying the amount of time by the predetermined amount of material per unit time that is loaded onto the conveyor by the feeder. The predetermined amount of material per unit time may be determined by a total load amount per loading operation set for the feeder and the loading time during which the feeder loads the total load amount onto the conveyor. The loading time may be determined by a velocity and a stroke of a movable member of the feeder.

Other features and aspects of the present disclosure will be apparent from the following description and the accompanying drawings.

### Brief Description of the Drawings

Fig. 1 shows a schematic overview of an exemplary material handling system in accordance with the present disclosure;
Fig. 2 shows an exemplary feeder of the material handling system in Fig. 1;
Fig. 3 is a graph showing an exemplary operation of two feeders of the material handling system in Fig. 1;
Fig. 4 is another graph showing an exemplary operation of two feeders of the material handling system in Fig. 1;
Fig. 5 is a graph showing a loading operation performed by a feeder of the material handling system in Fig. 1; and
Fig. 6 is a graph showing a load distribution on the conveyor of the material handling system in Fig. 1.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as a limiting description of the scope of protection. Rather, the scope of protection shall be defined by the appended claims.

The present disclosure may be based in part on the realization that, when a conveyor is used for transporting material in a mining system, it may be necessary to obtain information with respect to the distribution of material on the conveyor, for example, in order to determine whether additional material can be loaded onto the conveyor. In particular, the present disclosure may be based on the realization that, due to the harsh conditions in some underground mining facilities, the use of sensors for detecting the load distribution may be difficult, if not impossible. Therefore, the present disclosure teaches calculating the load distribution without using such sensors, instead using known properties of the conveyor and the feeders supplying material to the conveyor. In particular, each feeder is associated with a total amount of material to be loaded onto the conveyor during a loading operation of the feeder. The amount of material loaded onto the conveyor per unit time is determined based on this total amount of material and, for example, the time it takes to perform a single loading operation. Further, using the known movement speed of the conveyor, it is possible to determine at which position of the conveyor a particular feeder loads the material onto the conveyor, and to determine the spatial distribution of the associated load on the conveyor. By continuously monitoring the loading operation of each feeder, the total load distribution for the conveyor can be known at all times.

The present disclosure may further be based in part on the realization that, using the above-described load calculation, it is possible to control the feeders of the mining system in an efficient manner such that any gaps or empty spaces on the conveyor can be appropriately filled by one or more of the feeders disposed downstream of the gap or empty space. In this respect, the present disclosure may also be based in part on the realization that, in order to increase the durability of the system, it is advantageous to balance the loading performed by the individual feeders. In other words, the present disclosure may be based on the realization that it may be advantageous to prioritize the feeders that are to load material onto a specific portion of the conveyor based on the number of loading operations each feeder has to perform in order to achieve a balanced number of loading operations for all feeders.

In addition, the present disclosure may be based in part on the realization that in order to achieve an efficient loading of the conveyor, the feeders may be prioritized with respect to their position along the conveyor. For example, conveyors located further downstream, i.e., closer to a drop point of the conveyor, may be given priority over feeders located further upstream.

The present disclosure may be also be based in part on the realization that the total amount of material loaded onto the conveyor during a loading operation of a feeder may be used as a parameter for controlling the feeders in the material handling system. For example, the actual amount of material loaded onto the conveyor by a feeder may be measured using an appropriate sensor and may be used in a feedback control for adjusting the total amount of material to be loaded onto the conveyor by the feeder. Provided that the time that is necessary for a single loading operation is known, and based on the movement speed of the conveyor, the amount of material loaded onto the conveyor by each feeder per unit time can then be determined based on the total amount of material per loading operation.

The present disclosure may further be based on the realization that, in case a single hydraulic pump is associated with a plurality of feeders, in some cases only one of the plurality of feeders can be operated at a given time. Therefore, in such cases, a control has to be implemented that takes into account that only one of the plurality of feeders associated with a given pump can be operated at a given time.

The present disclosure may further be based on the realization that a more sophisticated control of the feeders can be achieved by adjusting the loading times, for example, by adjusting the velocity of a movable element of the feeder and/or the stroke of the movable element. In this manner, each feeder can load the total load amount per loading operation onto the conveyor during several partial loading operations, resulting in a more flexible system.

The present disclosure may also be based in part on the realization that the results of the calculation of the load distribution based on the operation of the feeders may be combined with measurements by sensors associated with the conveyor, for example, height sensors for determining a height of the material on the conveyor. In this manner, the operation of the system can be further optimized.

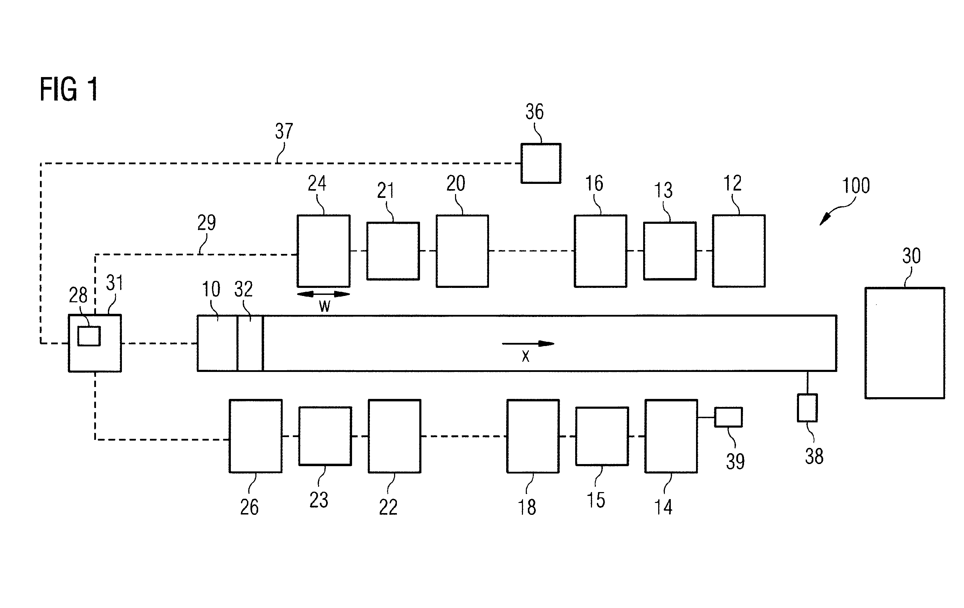

Referring now to the Figures, Fig. 1 shows a schematic overview of a material handling system 100 for use in underground mining systems.

As shown in Fig. 1, material handling system 100 comprises a conveyor 10 configured to transport material along a first direction x. A plurality of feeders 12, 14, 16, 18, 20, 22, 24, 26 are arranged adjacent to conveyor 10 at different positions in the first direction x. Each feeder 12, 14, 16, 18, 20, 22, 24, 26 is arranged at a draw point for drawing fractured or fragmented rock material, for example, during caving exploitation. In such a system, fragmented rock material falls onto each feeder 12, 14, 16, 18, 20, 22, 24, 26 from above and is loaded onto conveyor 10 by the respective feeders. It will be appreciated, however, that the present disclosure may also be applicable to other mining systems than caving exploitation systems, as long as material to be extracted is loaded onto a conveyor using a plurality of feeders.

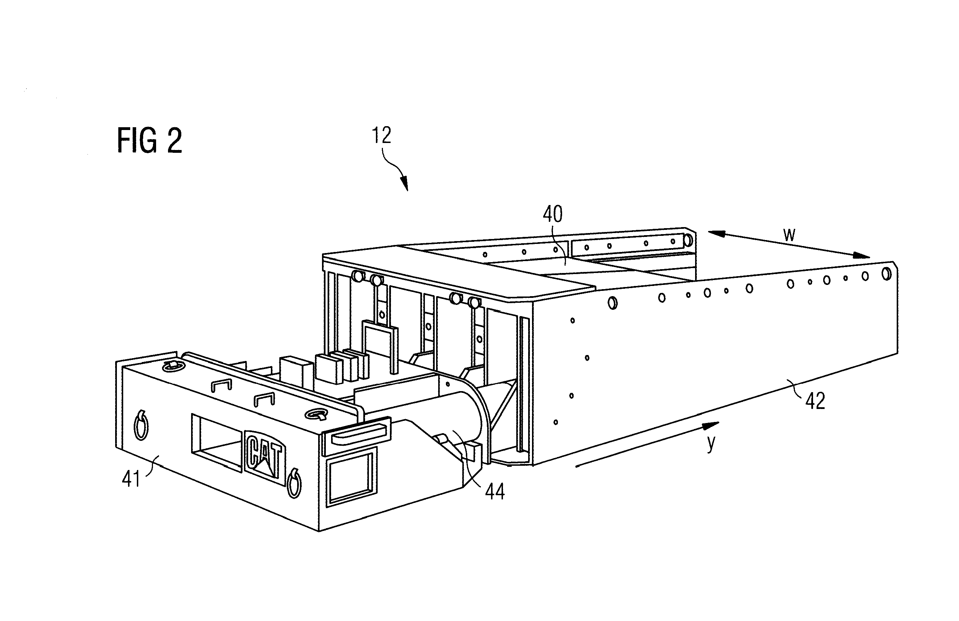

Fig. 2 shows an exemplary embodiment of feeder 12 as one example of feeders 12, 14, 16, 18, 20, 22, 24, 26 of system 100. As shown in Fig. 2, each feeder 12 is configured as a hydraulic feeder (also called a "dozer") having a drawer 42 and a pusher (a movable element) 40 disposed inside drawer 42 and configured to reciprocate in a second direction y. Drawer 42 has a width w in the first direction x (see also Fig. 1). A pair of hydraulic cylinders 44 is configured to move pusher 40 to perform a loading operation during which material inside the drawer 42 is pushed onto conveyor 10 (see Fig. 1). Hydraulic cylinders 44 are mounted on a base 41 of feeder 12. Base 41 is positioned relative to conveyor 10 at an appropriate positon to allow loading of material onto conveyor 10 by feeder 12.

As shown in Fig. 2, pusher 40 has a predetermined stroke associated with the movement of pusher 40 from the retracted position to the extended positon (to the right in Fig. 2). Movement of pusher 40 is performed at a substantially constant speed during extension and retraction. It should be appreciated, however, that in other embodiments the speed of movement of pusher 40 can be controlled to be variable. When pusher 40 is fully retracted, a predetermined amount of material is filled into drawer 42. This amount of material is a total amount of material per push that is loaded onto conveyor 10 as pusher 40 moves from the fully retracted position to the fully extended position. This will be described in more detail below.

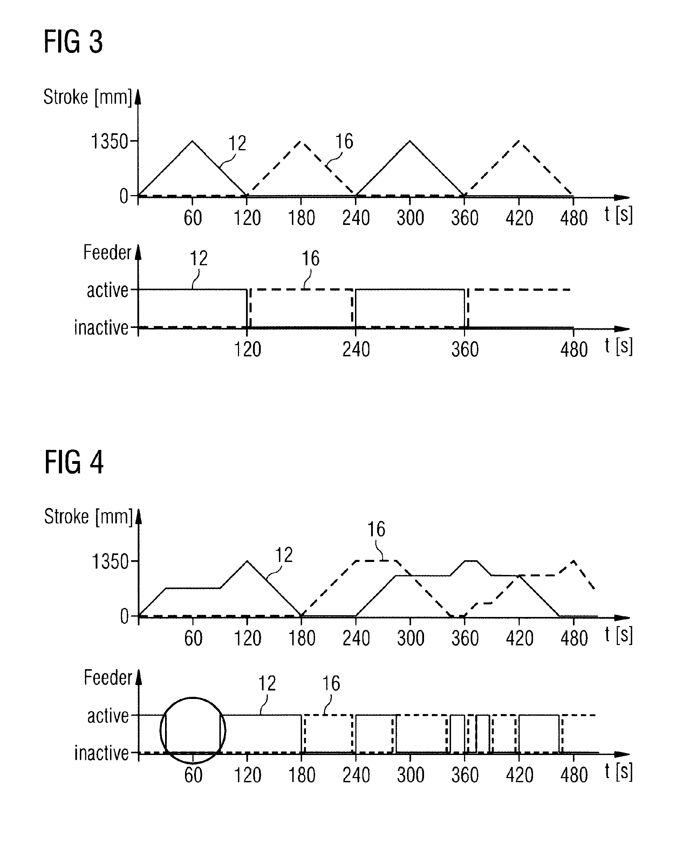

Returning to Fig. 1, a plurality of hydraulic pumps 13, 15, 21, 23 is associated with the plurality of feeders 12, 14, 16, 18, 20, 22, 24, 26. In the exemplary embodiment, each hydraulic pump is associated with two feeders. In particular, hydraulic pump 13 is associated with feeders 12, 16, hydraulic pump 15 is associated with feeders 14, 18, hydraulic pump 21 is associated with feeders 20, 24 and hydraulic pump 23 is associated with feeders 22, 26. Each hydraulic pump 13, 15, 21, 23 is configured to supply a predetermined amount of hydraulic fluid. Each pump 13, 15, 21, 23 is configured such that the amount of hydraulic fluid supplied by the pump is sufficient to operate one of the associated feeders. Therefore, only one of the two associated feeders may be operated at a given time. This is shown, for example, in Fig. 3. As shown in Fig. 3, while feeder 12 performs an operation of first extending from the fully retracted position to the fully extended position, and then returning to the fully retracted position, feeder 16 is inactive. After feeder 12 has returned to the fully retracted position, feeder 16 can perform the same loading operation while feeder 12 is inactive. As shown in Fig. 3, in one example, the stroke of each feeder 12, 16 may be, for example, 1350 mm. Further, each feeder 12, 16 moves with a constant velocity during extension and retraction, such that the total time for performing an extension and retraction operation of each feeder 12, 16 is, for example, 120 s. It will be readily appreciated that the association of a single hydraulic pump with two feeders is merely an example, and that many different configuration can be used. For example, each feeder may have a separate hydraulic pump associated with the same, or four feeders may share a single hydraulic pump. Further, in some embodiments, a hydraulic pump shared by two or more feeders may provide a hydraulic flow that is sufficient for simultaneously operating two or more feeders.

Returning again to Fig. 1, a control unit 31 is in communication with feeders 12, 14, 16, 18, 20, 22, 24, 26 and hydraulic pumps 13, 15, 21, 23 via a communication line 29. It will be readily appreciated that each feeder and/or hydraulic pump may be provided with a corresponding communication interface and/or control unit to facilitate an exchange of information and/or a control by control unit 31. Further, control unit 31 is in communication with conveyor 10, for example, with a speed sensor 38 associated with conveyor 10 in order to determine the movement speed of conveyor 10. In some embodiments, control unit 31 may be configured to control operation of conveyor 10, for example, starting/stopping the same or setting the movement speed of the same. In addition, control unit 31 is in communication with a height sensor 36 disposed above conveyor 10 and configured to detect a loading height of the material loaded on conveyor 10 at one or several positions along conveyor 10. Finally, control unit 31 is in communication with load sensors associated with each feeder 12, 14, 16, 18, 20, 22, 24, 26 (only the load sensor 39 associated with feeder 14 is shown in Fig. 1).

Control unit 31 includes a load calculating unit 28 configured to calculate a load distribution of the material on conveyor 10. This will be described in more detail below. It should be appreciated that, while load calculating unit 28 is shown as being included in control unit 31, in other embodiments load calculating unit 28 may be a separate unit in communication with control unit 31.

The material transported by conveyor 10 in the first direction x is dropped onto a crusher 30 disposed at a drop point of conveyor 10. Crusher 30 crushes the material, and the crushed material may be transported for further processing using another conveyor (not shown). In some embodiments, an underground mining system may, for example, include a plurality of material handling systems 100, and each conveyor 10 may be configured to supply the material transported by the same to, for example, a main conveyor of the mining system. In such embodiments, for example, the output of each material handling system may be controlled to result in a desired mixture of extracted material from the different draw points of the system, resulting in a desired mixture of ore. In particular, it should be noted that the description of material handling system 100 is also applicable to a system comprising a plurality of material handling systems supplying material to a main conveyor. For example, the load distribution on the main conveyor can be calculated on the basis of the movement speed of the same and an amount of material per unit time loaded onto the main conveyor by each material handling system. In this respect, each material handling system may be considered a "feeder" as described herein, and may be controlled in a similar manner.

Conveyor 10 is operated continuously during a continuous mining operation of material handling system 100. In order to allow for an efficient extraction of ore during this continuous mining operation, it is advantageous to obtain the load distribution of the material on conveyor 10 as conveyor 10 moves in the first direction x. In this manner, gaps or empty spaces on conveyor 10 can be filled by appropriate ones of feeders 12, 14, 16, 18, 20, 22, 24, 26, and an overloading of conveyor 10 at a particular location of the same can be avoided. The load distribution on conveyor 10 can be obtained by load calculating unit 28 based on a movement speed of conveyor 10 in the first direction x and operating or loading times of the plurality of feeders 12, 14, 16, 18, 20, 22, 24, 26 during which they perform a loading operation. This will be described in more detail in the following.

As previously mentioned, during extension of each pusher 40 of one of feeders 12, 14, 16, 18, 20, 22, 24, 26, a predetermined amount of material is loaded onto conveyor 10 as conveyor 10 passes the respective feeder. This will be described in the following with reference to Figs. 3, 5 and 6. As shown in Fig. 3, a stroke of pusher 40 is, for example, 1350 mm. A total load amount per push set for pusher 40 of, for example, feeder 26 is, for example, 10000 kg. It should be appreciated that the total load amount per push may be set to be different for each feeder 12, 14, 16, 18, 20, 22, 24, 26, or may be the same. The duration of a single extension stroke of pusher 40 is 60 seconds. Accordingly, the velocity of pusher 40 as it moves from the fully retracted position to the fully extended position is 22.5 mm/s. Further, the width of pusher 40, i.e., the associated feeder, is 4000 mm. Based on these known quantities, it can be determined that, in one second, 166.66 kg are loaded onto conveyor 10 over the total width of 4000 mm of pusher 40.

In order to determine the amount of material loaded onto conveyor 10, load calculating unit 28 divides a length of conveyor 10 into a plurality of segments (a particular segment 32 is shown in Fig. 1). Further, load calculating unit 28 determines the amount of material loaded onto each segment as it passes each of the plurality of feeders 12, 14, 16, 18, 20, 22, 24, 26 in the following manner.

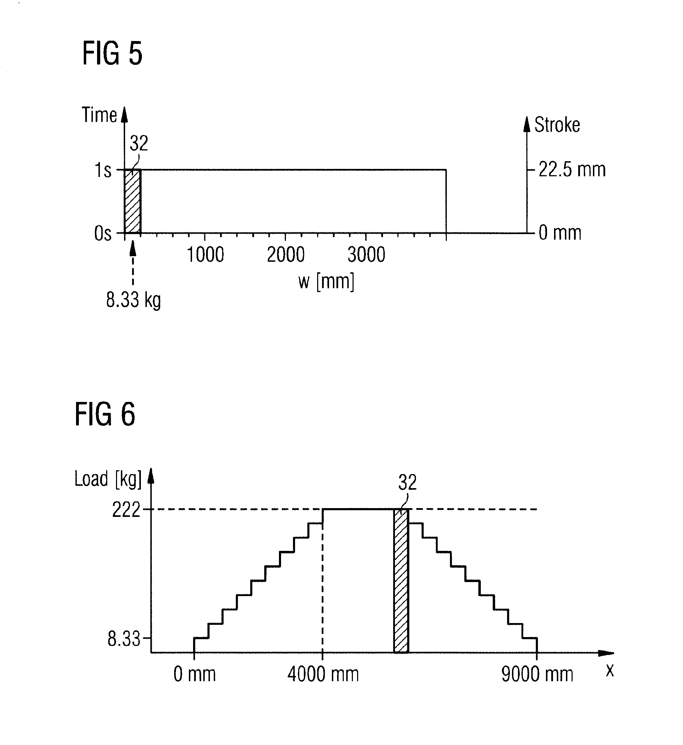

For example, segment 32 may have a width of 200 mm. As shown in Fig. 5 and based on the above-described calculation, this results in that, as segment 32 enters the loading zone of, for example, feeder 26 as pusher 40 starts to move from the fully retracted position to the fully extended position, segment 32 receives a load of 8.33 kg during the first second of the push of pusher 40. The same applies to the segments further downstream that are positioned within the width w of feeder 26 (see Fig. 5). As long as the first segment 32 is in the corresponding loading zone of feeder 26, it will receive 8.33 kg of material per second while pusher 40 moves to the fully extended position. Based on the known movement speed of conveyor 10 of, for example, 150 mm/s, it can easily be verified that segment 32 will be in the loading zone of feeder 26 for about 26.66 s. Therefore, as shown in Fig. 6, first segment 32 receives a total load of about 222 kg as it passes feeder 26.

As shown in Fig. 6, it is obvious that the push of feeder 26 will result in a stepwise load distribution for the segments. In particular, segments downstream of segment 32 will receive a smaller load than segment 32, while several segments upstream of segment 32 will receive the maximum load of 222 kg. It will be readily appreciated that the load per segment will again start to decrease for segments that are still further upstream of segment 32. As a result, the load distribution shown in Fig. 6 can be obtained for a plurality of segments that pass, for example, feeder 26 during a single push of feeder 26. It will be readily appreciated that load calculating unit 28 can perform the above-described calculation for each push of each feeder 12, 14, 16, 18, 20, 22, 24, 26 and superpose this information in order to obtain the total load distribution for conveyor 10. It will also be readily appreciated that load calculating unit 28 can obtain the segments that receive a load during a push of any given feeder 12, 14, 16, 18, 20, 22, 24, 26 (i.e., their position) based on an initial position of the segments and the movement speed of conveyor 10.

In order to achieve a balance load distribution on conveyor 10, control unit 31 is configured to receive the calculated load distribution from load calculating unit 28 and to determine which feeder 12, 14, 16, 18, 20, 22, 24, 26 is to fill any gaps or empty spaces present on conveyor 10. In particular, control unit 31 may, as a first step, determine which of feeders 12, 14, 16, 18, 20, 22, 24, 26 can be operated to perform a loading operation that results in filling off the gap or empty space. In case several of feeders 12, 14, 16, 18, 20, 22, 24, 26 could perform such a loading operation, control unit 31 is further configured to assign priorities to the plurality of feeders, and to control a loading operation based on the assigned priorities. For example, the priorities may be assigned based at least in part on a number of loading operations (i.e. pushes) to be performed by each feeder 12, 14, 16, 18, 20, 22, 24, 26 to achieve a balanced number of loading operations for the feeders. For example, control unit 31 may record the number of loading operations performed by each feeder from the start of operation of material handling system 100, and assign the priorities based on these numbers. In other embodiments, for example, control unit 31 may determine the number of loading operations performed by the individual feeders during a given time period, and assign priorities based on these numbers. In some examples, a sum of all pushes to be performed by all feeders 12, 14, 16, 18, 20, 22, 24, 26 may be divided by the number of feeders and multiplied by the number of pushes to be performed by each feeder to obtain a weight factor for each feeder. It will be radially appreciated that any other appropriate criteria can be used in order to determine the corresponding priorities based on the number of pushes to be performed or having been performed.

In addition, control unit 31 is configured to assign priorities based on a distance of each feeder to, for example, crusher 30, i.e., the drop point of conveyor 10. For example, control unit 31 may assign a higher priority to feeder 12, which is closer to crusher 30, in case the number of loading operations to be performed is the same for two or more feeders, for example, feeders 12 and 20. It will be readily appreciated that any appropriate priorities based on the position of the feeders along conveyor 10 may be used.

In some embodiments, where the plurality of feeders are arranged on both sides of conveyor 10 in the transverse direction, the priorities may be assigned based on a side on which the feeders are arranged. For example, if additional material is to be loaded on a segment that has previously been loaded by a feeder on one side, the feeders on the other side may be prioritized in order to achieve a uniform distribution in the transverse direction.

Although it has been described with respect to feeders 3, 5 and 6 that, when a feeder, for example, feeder 12, performs a loading operation, pusher 40 is extended from the fully retracted position to the fully extended position, and is fully retracted afterwards, it will be readily appreciated that a partial extension and a partial retraction of each feeder may be used in order to allow for a more sophisticated control of the amount of material loaded onto conveyor 10 by each feeder. One example for such partial extension and retraction of, for example, feeders 12 and 16, is shown in Fig. 4.

As shown in Fig. 4, for example, feeder 12 first performs a partial extension, waits for a specified time, and then completes its extension. As also shown in Fig. 4, while feeder 12 is operated, feeder 16 is inactive due to sharing hydraulic pump 13 with feeder 12. As highlighted in Fig. 4 by the circle, it is also possible that both feeders 12 and 16 are inactive during a given time period. For example, this may occur when, although feeder 16 could perform a loading operation, either fully or partially, the load distribution calculated by load calculating unit 28 may indicate that the region of conveyor 10 in front of feeder 16 is already fully loaded, such that control unit 31 does not activate feeder 16. It will be readily appreciated that there are many different possibilities for controlling the operation of feeders 12, 14, 16, 18, 20, 22, 24, 26 in this manner to achieve a desired flexibility and efficiency of the operation of material handling system 100. For example, the stroke of pusher 40 and/or the velocity of the same may be modified in accordance with, for example, the amount of material already present on conveyor 10.

In order to further improve the determination of the load distribution for conveyor 10, height sensor 36 may be used. For example, height sensor 36 may be an ultrasonic sensor or a radar sensor configured to measure a height of the material on conveyor 10 at one or more locations of conveyor 10. The results obtained by height sensor 36 may be fed back to the calculation of the load distribution by load calculating unit 28, resulting in an improved control of material handling system 100.

In addition, control unit 31 may be configured to set or adjust a total load amount per push for each feeder 12, 14, 16, 18, 20, 22, 24, 26. As the calculation of the load distribution resulting from operation of feeders 12, 14, 16, 18, 20, 22, 24, 26 is based on this total load amount per push, it will be appreciated that this may affect operation of material handling system 100 when the above-described control is performed. Therefore, control unit 31 may be configured to optimize this parameter in order to achieve a desired efficiency and/or homogeneity of the load distribution. Further, load sensor 39 associated with, for example, feeder 14, may be configured to determine the actual total load amount per push provided by feeder 14. This actual total load amount can then be used by control unit 31 in a feedback control in order to adjust a desired total load amount per push set by control unit 31. Any appropriate control can be used to implement this feedback control, for example, a PID control or the like. In some embodiments, control unit 31 may be configured to separately adjust the total load amount per push for each feeder 12, 14, 16, 18, 20, 22, 24, 26 to result in, for example, a uniform extraction from the individual draw points, a uniform mixture of ore extracted from the draw points, and the like.

While the exemplary material handling system described above included 8 feeders 12, 14, 16, 18, 20, 22, 24, 26 disposed in a staggered configuration on both sides of conveyor 10, it will be readily appreciated that any other number and/or arrangement can be used. Further, as previously mentioned, the number of pumps may also be modified, if desired. Also, as described above, any number of material handling systems 100 may be included in a mining system.

### Industrial Applicability

The industrial applicability of the systems and methods disclosed herein will be readily appreciated from the foregoing discussion. One exemplary application is the application in an underground mining system, for example, a caving exploitation system, in which material is extracted at a plurality of draw points and supplied to a conveyor to be transported for further processing.

An exemplary method of operating a material handling system in an underground mining system comprises a first step of determining an amount of material per unit time loaded onto the conveyor by each feeder during a loading operation. For example, control unit 31 may set or adjust a total load amount per push for each feeder 12, 14, 16, 18, 20, 22, 24, 26. Based on the known velocity and stroke of each feeder 12, 14, 16, 18, 20, 22, 24, 26, the amount of material per unit time that is loaded onto conveyor 10 can then be determined.

As a next step, a load distribution of the material on conveyor 10 can be calculated based on the movement speed of conveyor 10 and loading times of feeders 12, 14, 16, 18, 20, 22, 24, 26 during which the feeders perform the loading operation, i.e., move to push material onto conveyor 10, as described above with respect to Figs. 3, 5 and 6.

Finally, control unit 31 can control the loading operation of feeders 12, 14, 16, 18, 20, 22, 24, 26, for example, a loading time (i.e., the stroke or velocity of the associated pusher) based on the calculated load distribution in the above-described manner. In particular, control unit 31 may assign priorities to different feeders 12, 14, 16, 18, 20, 22, 24, 26, for example, based on a number of pushes to be performed and/or a position along conveyor 10. In addition, control unit 31 may correct or adjust a desired total load amount per push for each feeder 12, 14, 16, 18, 20, 22, 24, 26, for example, using a feedback control based on a detected actual total load amount. Further, the control of feeders 12, 14, 16, 18, 20, 22, 24, 26 may be modified based on height measurements performed by height sensor 36, for example, in case said height measurements indicate that a particular segment of conveyor 10 is already overloaded, despite the calculated load distribution showing that an additional load can still be applied to said segment.

It will be appreciated that control unit 31 may comprise a memory, a processor, communication interfaces and other components that are necessary to run a computer program comprising computer-executable instructions that cause the control unit to perform the steps of the methods disclosed herein. Further, it is contemplated that control unit 31 may include a plurality of control units in communication with each other, and that the computer program may include a plurality of modules, each running on a separate control unit associated with, for example, the feeders or hydraulic pumps of the material handling system, if desired.

It will be appreciated that the foregoing description provides examples of the disclosed systems and methods. However, it is contemplated that other implementations of the disclosure may differ in detail from the foregoing examples. All references to the disclosure or examples thereof are intended to reference the particular example being discussed at that point and are not intended to imply any limitation as to the scope of disclosure more generally. All methods described herein may perform in any suitable order unless otherwise indicated herein or clearly contradicted by context.

Accordingly, this disclosure includes all modifications and equivalences of the subject-matter recited in the claims appended hereto as permitted by applicable law. Moreover, any combination of the above-described elements in all possible variations thereof is encompassed by the disclosure unless otherwise indicated herein or clearly contradicted by context.

Although the preferred embodiments of this disclosure have been described herein, improvements and modifications may be incorporated without departing from the scope of the following claims.

## Claims

1. A material handling system (100) for use in underground mining, comprising:
a conveyor (10) configured to transport material along a first direction (x);
a plurality of feeders (12-26) arranged adjacent to the conveyor (10) at different positions in the first direction (x), each of the plurality of feeders (12-26) being configured to load a predetermined amount of material per unit time onto the conveyor (10) during a loading operation;
a load calculating unit (28) configured to calculate a load distribution of the material on the conveyor (10) based on a movement speed of the conveyor (10) in the first direction (x) and operating times of the plurality of feeders (12-26) during which the plurality of feeders (12-26) perform the loading operation; and
a control unit (31) configured to control the loading operation of the plurality of feeders (12-26) based on the calculated load distribution.

2. The system of claim 1, wherein the load calculating unit (28) is further configured to divide a length of the conveyor (10) into a plurality of segments (32), and to determine the amount of material loaded onto each segment (32) as it passes each of the plurality of feeders (12-26).

3. The system of claim 1 or 2, wherein the load calculating unit is configured to calculate the load distribution based at least in part on a loading width (w) of each of the plurality of feeders (12-26).

4. The system of any one of claims 1 to 3, wherein each of the plurality of feeders (12-26) is configured as a hydraulic feeder comprising a retractable pusher (40), wherein the amount of material per unit time loaded onto the conveyor (10) is determined at least in part by a total load amount per push of the pusher (40).

5. The system of claim 4, wherein the control unit (31) is configured to set a desired total load amount per push for each pusher (40).

6. The system of claim 5, further comprising a load sensor (39) associated with each pusher (40) and configured to measure an actual total load amount per push, wherein the control unit (31) is configured to adjust the desired total load amount per push based on the measured actual total load amount.

7. The system of any one of claims 4 to 6, wherein the load calculating unit (28) is further configured to calculate the amount of material per unit time loaded onto the conveyor (10) based at least in part on a velocity of the pusher (40) while performing the loading operation.

8. The system of any one of claims 4 to 7, further comprising at least one hydraulic pump (13, 15, 21, 23) associated with the plurality of feeders (12-26) for operating the same to selectively perform the loading operation and a retracting operation during which the pusher (40) is retracted to prepare for another loading operation.

9. The system of claim 8, wherein the pusher (40) performs the loading operation and/or the retracting operation with a substantially constant velocity.

10. The system of claim 8 or 9, wherein the at least one hydraulic pump (13, 15, 21, 23) is shared by two or more of the plurality of feeders (12-26), and the control unit (31) is configured to selectively associate the at least one hydraulic pump (13, 15, 21, 23) with the two or more of the plurality of feeders to perform the loading operation or the retracting operation.

11. The system of any one of claims 1 to 10, wherein the control unit (31) is further configured to assign priorities to the plurality of feeders (12-26), and to control the loading operation of the plurality of feeders based on the assigned priorities.

12. The system of claim 11, wherein the control unit (31) is configured to assign the priorities based at least in part on a number of loading operations to be performed by each feeder (12-26) and/or a distance of each feeder to a drop point of the conveyor (10).

13. The system of any one of claims 1 to 12, further comprising at least one of a height sensor (36) configured to detect a height of the material on the conveyor (10) and a speed sensor configured to detect the movement speed of the conveyor (10).

14. A method of operating a material handling system (100) comprising a conveyor (10) configured to transport material along a first direction (x) and a plurality of feeders (12-26) arranged adjacent to the conveyor (10) at different positions in the first direction (x), comprising:
determining an amount of material per unit time loaded onto the conveyor (10) by each feeder (12-26) during a loading operation;
calculating a load distribution of the material on the conveyor (10) based on a movement speed of the conveyor (10) in the first direction (x) and operating times of the plurality of feeders (12-26) during which the plurality of feeders (12-26) perform the loading operation; and
controlling the loading operation of the plurality of feeders (12-26) based on the calculated load distribution.

15. A computer program comprising computer-executable instructions which, when run on a computer, cause the computer to perform the steps of the method of claim 14.
